(19) Europäisches Patentamt
European Patent Office
Office européen des brevets

(11) EP 3 139 152 A1

(12) EUROPEAN PATENT APPLICATION

(43) Date of publication:
08.03.2017 Bulletin 2017/10

(51) Int Cl.:
G01N 21/3504 (2014.01)     G01J 3/433 (2006.01)
G01N 21/39 (2006.01)

(21) Application number: 15183828.1

(22) Date of filing: 04.09.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Siemens Aktiengesellschaft
80333 München (DE)

(72) Inventor: The designation of the inventor has not
yet been filed

(54) **OPTICAL METHANE DETECTOR USING HIGHER HARMONIC BACKGROUND FUNCTIONS FOR DETERMINING THE METHANE CONCENTRATION**

(57)    Optical methane detector for the detection of the methane content of a gas, comprising:

a reference gas cell;

a light source to illuminate said gas and said reference gas cell with visible or infrared radiation;

a light detector to capture parts of said radiation reflected back from a solid surface;

a control unit to control the light source to modulate the wavelength of said radiation;

wherein

the control unit performs an analysis of the signal of the light detector to calculate the transmittance of the gas and from this the methane concentration in the gas utilizing at least two of the harmonic spectra of the light detector signal corresponding to multiples of a modulation frequency of the wavelength;

the control unit performs a first measurement using the signal of the light detector corresponding to the reference cell and calculates harmonic background functions comprising at least a second and third order harmonic function representing the behavior of the signal without influence of methane in the gas;

the control unit performs a second measurement using the signal of the light detector corresponding to the gas and performs a curve fitting algorithm that fits precalculated harmonic functions representing the optical transmission spectrum of the gas with the methane concentration as a fitting parameter together with the harmonic background functions to the measured values, the precalculated harmonic functions comprising at least the second and third order harmonic function corresponding to multiples of a modulation frequency of the wavelength.

EP 3 139 152 A1

**Description**

The invention relates to an optical gas detector suitable for sensing methane that is present in the surroundings of the sensor as well as a method for optical detection of methane.

Optical gas detectors can be valuable for a variety of applications, among them leak detection, occupational safety in industrial environments and compliance with regulations. Important measures of a sensor's suitability are its threshold of detection and its long term stability. Other important features are its chance of failing to detect the target gas although it is present and, inversely, the chance of signaling the presence of the target gas when its concentration is below the threshold (false alarm). The threshold of detection is usually dependent on the sensor's environment and the probabilities for error are therefore usually not known.

The objective of the present invention is to provide an improved optical gas detector suitable for sensing methane and a method for optical detection of methane that allow remote methane sensing and provide an improved signal-to-noise ratio.

The present invention provides an optical methane detector for the detection of the methane content of a gas, comprising a reference gas cell; a light source to illuminate said gas and said reference gas cell with visible or infrared radiation; a light detector to capture parts of said radiation reflected back from a solid surface; a control unit to control the light source to modulate the wavelength of said radiation; wherein the control unit performs an analysis of the signal of the light detector to calculate the transmittance of the gas and from this the methane concentration in the gas utilizing at least two of the harmonic spectra of the light detector signal corresponding to multiples of a modulation frequency of the wavelength; the control unit performs a first measurement using the signal of the light detector corresponding to the reference cell and calculates harmonic background functions comprising at least a second and third order harmonic function representing the behavior of the signal without influence of methane in the gas; the control unit performs a second measurement using the signal of the light detector corresponding to the gas and performs a curve fitting algorithm that fits precalculated harmonic functions representing the optical transmission spectrum of the gas with the methane concentration as a fitting parameter together with the harmonic background functions to the measured values, the precalculated harmonic functions comprising at least the second and third order harmonic function corresponding to multiples of a modulation frequency of the wavelength.

The present invention also provides a method for optical methane detection comprising illuminating a reference gas with first visible or infrared radiation; capturing parts of said first radiation and generating a first signal representing said captured parts of said first radiation; illuminating a gas with second visible or infrared radiation; capturing parts of said second radiation reflected back from a solid surface and generating a second signal representing said captured parts; modulating the emission wavelength of said first and second radiation; performing an analysis of said signals to calculate the transmittance of the gas and from this the methane concentration in the gas utilizing at least two of the harmonic spectra of the signal corresponding to multiples of a modulation frequency of the wavelength, this step comprising:

  performing a first measurement using the first signal and
  calculating harmonic background functions comprising at least a second and third order harmonic function representing the behavior of the signal without influence of methane in the gas; performing a second measurement using the second signal and performing a curve fitting algorithm that fits precalculated harmonic functions representing the optical transmission spectrum of the gas with the methane concentration as a fitting parameter together with the harmonic background functions to the measured values, the precalculated harmonic functions comprising at least the second and third order harmonic function corresponding to multiples of a modulation frequency of the wavelength.

The method of varying the emission wavelength periodically with two different frequencies and analyzing the second harmonic spectrum is known as wavelength modulation spectroscopy, WMS.

Advantageously, this optical methane detector can obtain signals at a higher signal-to-noise ration, decreasing its detection threshold or increasing the quality of the measurement results. The sensor is especially suited to methane detection through the use of said formula.

For the harmonic background functions of order 0 to 3 the control unit may use a cubic function, a quadratic function, a linear function and a constant value.

The control unit may use the fitting algorithm on all measurement values of a measurement combined with a single variable methane concentration as one of the fit parameters.

In the fitting algorithm the control unit may perform a weighting of the residuals with a noise value that is assigned to each of the harmonics or each of the individual measurement values.

The optical methane detector may comprise a reference gas cell filled with a gas mixture containing one of the group of ethylene, ethane and an isotope of methane disposed in the light path between light source and light detector.

The optical methane detector may comprise a second light detector and a reference gas cell filled with a gas mixture containing methane disposed in the light path between light source and second light detector.

The optical methane detector may comprise a logarithmic transimpedance amplifier for the light detector.

The invention itself, however, may be best understood by reference to the following detailed description of the invention, which describes an exemplary embodiment of the invention, taken in conjunction with the accompanying drawing, in which:

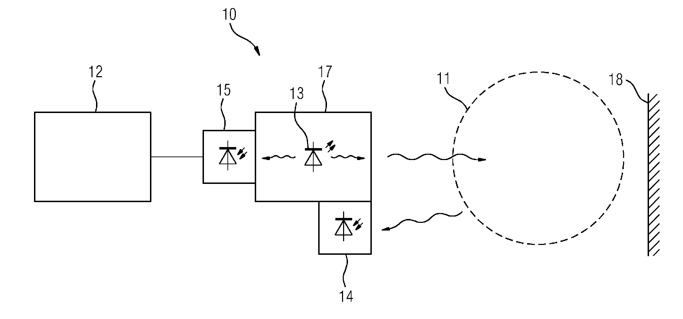

Fig. 1 is a schematic view of the optical sensor according to the present invention.

Referring to the drawing, an optical methane sensor 10 in accordance with the preferred embodiment of the present invention comprises a control unit 12, a tunable laser diode 13 and a photo diode 14. The laser diode 13 is arranged in a housing 17 which is filled with a gas mixture comprising air and 5 weight-% ethylene (C2H4). The laser diode 13 emits its radiation in the front as well as the back direction. It is arranged so that the front direction radiation emission is directed into a volume of gas 11 that is the target gas for the measurement of the sensor 10. The radiation is reflected partly at a surface 18 that is placed on the far side of the gas volume 11 and falls partly into the photo diode 14. The surface 18 may be an arbitrary surface that happens to be arranged on the far side of the gas volume. Surface 18 may also be arranged purposefully and may be reflective, retroreflective or a diffuse reflector.

The rear direction radiation emission of the laser diode 13 is directed into a reference photo diode 15 that is placed directly adjacent to the housing 17. Both the rear direction radiation as well as the front direction radiation pass through the gas mixture present in the housing 17.

The control unit 12 controls the operation of the tunable laser diode 13 and receives signals from the photo diodes 14, 15. The control unit 12 further calculates the presence and/or concentration of methane gas in the target gas volume 11 from the received signals.

Calculation of the methane concentration in the control unit 12 can be done in one of several embodiments, of which a preferred method is described. In this method infrared light of a wavelength in the area of 1650 nm is emitted into the target gas volume 11. Parts of said infrared light are transmitted to the photo diode 14 while other parts are absorbed by gases in the target gas volume 11. Since the wavelength of the infrared light is tied to a methane gas absorption line and the emitted spectrum is narrow the transmission is strongly tied to the presence and concentration of methane gas.

In order to use the method known as wavelength modulation spectroscopy the laser diode 13 is controlled to periodically sweep through a wavelength range with a width of about 1 nm with a period of 0.1 s while at the same time the laser current and therefore the wavelength undergoes a sinusoidal variation of about 0.05 nm with a faster period of 0.1 ms.

As a first step a measurement using the reference photo diode 15 is conducted. For this the signal of the reference photo diode 15 is sampled over one sweep of a wavelength range that is associated with absorption lines of ethylene gas. The signal samples gathered are digitally analyzed to produce reference signal harmonic functions of the orders 0 to 3 with respect to the frequency of the sinusoidal wavelength modulation. The control unit 12 then performs a fitting algorithm that will fit harmonic background functions P0 to P3 to the gathered reference signal harmonic functions.

Preferably the harmonic background functions are set up as follows: P0 as a cubic function, P1 as a quadratic function, P2 as a linear function and P3 as a constant. The fitting algorithm will find a best solution for all the corresponding free parameters of the harmonic background functions, the wavelength position and span as well as the ethylene concentration which is ideally known at the beginning but may change over time, e.g. by an escape of ethylene from housing 17.

This first step including the measurement of the signal of the reference photodiode 15 and the fitting algorithm to determine coefficients for the harmonic background functions P0 to P3 gives an indication of background behavior like the behavior of the laser diode 13, e.g. its exact wavelength at a given laser current as well as other background influences that are independent of the methane content of the target gas volume 11. Therefore the first step is preferably conducted in intervals that are large compared to the actual measurement of the methane content of the gas described below. Good examples of such intervals are 10 s, 30 s, 1 minute or 5 minutes.

As a second step, the actual methane content measurement and analysis are performed. The signal of the photo diode 14 is sampled over one sweep of the wavelength of the laser diode 13 in a wavelength range that is associated with an absorption line of methane gas, e.g. at a wavelength of 1650 nm. The signal samples gathered are digitally analyzed to produce signal harmonic functions of the orders 0 to 3 with respect to the frequency of the sinusoidal wavelength modulation.

Preferably a set of 4 functional dependencies is used for the fitting process:

$$S_n(x) = H_0(x) \cdot P_n(x) + e^{i\varphi n} H_n(x) \cdot P_0(x) +$$

$$0{,}5 \cdot \sum_{\substack{m=1,2,\dots \\ m \neq n}} e^{i\varphi \cdot m} H_m(x) \cdot P_{n-m}(x)$$

with

n = 0, 1, 2, 3;
$S_n(x)$ the signal harmonic functions
for $P_i$ with i<0 the complex conjugate of $P_{-i}$ will be used;
the sum preferably truncated when n-m > 2;
$H_n(x)$ theoretical harmonic spectra calculated from parameters of methane or taken from a database; $\varphi$ the phase shift between frequency modulation and intensity modulation of the laser diode 13.
x is a normalized wavelength centered on the methane absorption line, e.g. $x = (\lambda - \lambda_0)/\lambda_A$ with
$\lambda$ the current wavelength;
$\lambda_0$ the absorption line center;
$\lambda_A$ the width of the wavelength sweep.

In the linear absorption regime we have for n > 0, $H_n(x) = C\, H_{n,0}(x)$ with $H_{n0}(x)$ the theoretical harmonic spectrum for a gas with concentration 1 ppm and C the concentration in ppm. In the fully general model $H_n(x)$ is dependent on the methane gas concentration C, the gas concentration of the reference gas $C_{ref}$, gas pressures, and gas temperatures and the wavelength parameters $\lambda_0$ and $\lambda_A$.

Preferably the fitting process is conducted in such a way that only two fitting parameters are varied, namely the concentration of methane which is the result of the process and is contained in the theoretical harmonic spectra and the proportionality factor C. The fitting process can be implemented as an efficient linear fit which will invariably converge.

The fitting process is advantageously conducted for the set of four functional dependencies using the same values of methane concentration and proportionality factor C resulting in a single set of two result values. The first of the result values gives the best estimate of methane content for the current measurement values. The proportionality factor C which is the second result value can be disregarded.

Advantageously the fitting process yields residual values which are preferably analyzed to give a threshold value for methane detection. Thus the probability of not detecting a methane concentration that should be detected can be determined. This in turn can be indicated to the user, stored in a database or be used to give an alarm signal should the probability be too high, e.g. above 1%.

Concurrently the chance of a false alarm, i.e. detecting methane when none or too little is present can be determined. Again, this can be indicated to the user or stored in a database. A possible value may be given e.g. as the number of estimated false alarms per year.

The setup shown in Fig. 1 incorporates the reference gas directly into housing 17. Thus the front side laser diode 13 emission also traverses the reference gas. This will have a slight influence on the signal at photodiode 14. This can be compensated by a suitable addition to the theoretical harmonic spectra $H_n(x)$. This addition does not add a fitting parameter as the ethylene concentration can be evaluated as a fitting parameter from the reference measurement and will generally not deviate much from the concentration that was set upon construction of the sensor. Thus the ethylene concentration is already known when the fitting process for the methane measurement is done and the addition to the theoretical harmonic spectra is a function of x and the methane concentration only.

An advantageous variant assumes that the noise is not independent of x or in other words the noise is colored. The covariance matrix used in the fitting algorithm is advantageously constructed to reflect a) sinusoidal interference coming from laser interference from reflection on parallel surfaces and b) different noise amplitudes for the different orders of harmonic.

The covariance matrix can be constructed using the noise power density which is modeled as a peak shaped function (e.g. Lorentzian profile) for laser interference with an offset for white noise. The amplitude of said offset may be calculated from the noise power density before digital extraction of the signal harmonic functions at a frequency slightly off the harmonic frequencies. The amplitude, width and position of the Lorentzian are preset constants determined as part of sensor construction or calibration. From these values the covariance matrix is be calculated using numerical methods during sensor operation.

Alternatively the covariance matrix can be determined as part of a sensor calibration process in a laboratory measurement from the residuals and be stored in the sensor to be used as a constant during sensor operation.

When the covariance matrix W is calculated to include effects of colored noise, the calculation can be done in the following way:

$$W_{nm} = \frac{1}{RM \cdot S_{avg}} \cdot \int_{-RM/2}^{RM/2} S_{yy}(|f|) \cdot e^{2\pi i f \cdot (n-m)/(RM)} \cdot df$$

with

$W_{nm}$ elements of the covariance matrix; n,m = 1 to M
M the number of measurement values
$S_{yy}(f)$ the noise power density
R the inverse measurement time for a full set of M values, i.e. RM is the sample rate
$S_{avg}$ the average noise power density defined by

$$S_{avg} = \frac{2}{RM} \cdot \int_0^{RM/2} S_{yy}(|f|) df$$

In a more complex alternative, interference influences may also be suppressed. To do this the noise power density is modeled by

$$S_{yy}(f) = S_{yy0} + \frac{S_{yyI}}{1 + (f - f_C)^2/f_L^2}$$

This is a Lorentzian function with an offset with
$S_{yy0}$ the white noise power density;
$S_{yyI}$ the amplitude of the sinusoidal interference;
$f_C$ the frequency of the die sinusoidal interference;
$f_L$ a bandwidth parameter.
$S_{yy}I$ is determined empirically, e.g. by estimatin the amplitude of the interference, e.g. $10^{-3}$. Syy0 is known from theoretical shot noise or laser noise of the system. As an alternative it can be determined initially as part of a calibration process and stored in the sensor system for later use. Measuring $S_{yy}0$ may include measuring its dependence on the received laser power.
fC is determined from the laser tuning and period of the expected interference.

$$f_C = \frac{k}{D_{nu}}$$

with
$D_{nu}$ the estimated optical period length of the interference (in units of 1/cm) known from distances of the optical setup;
k the tuning speed of the laser (in units of (1/cm)/s).
$f_L$ is determined empirically and set to a percentage (around 0 to 10 %) of the sample rate, $f_L$ = pRM.
These empirical parameters are determined only once. Advantageously the fitting algorithm will then optimally handle and weigh interference together with white noise.
This variant increases the accuracy of the fitting process and thus the accuracy of the measurement result by effectively weighting the measurement values with the inverse of their assumed noise.
Another variant of the sensor does not use ethylene in housing 17 but instead uses a separate reference gas cell containing the target gas, i.e. methane together with the reference photo diode 15. In this way the reference measurement can be conducted using the same wavelength sweep used for the actual methane measurement and the theoretical harmonic spectra $H_n(x)$ do not have to be modified for the effect of the reference gas as the reference cell is not present in the light path of the methane measurement.

**Claims**

1. Optical methane detector for the detection of the methane content of a gas, comprising:

   a reference gas cell;
   a light source to illuminate said gas and said reference gas cell with visible or infrared radiation;
   a light detector to capture parts of said radiation reflected back from a solid surface;
   a control unit to control the light source to modulate the wavelength of said radiation;
   wherein
   the control unit performs an analysis of the signal of the light detector to calculate the transmittance of the gas and from this the methane concentration in the gas utilizing at least two of the harmonic spectra of the light detector signal corresponding to multiples of a modulation frequency of the wavelength;
   the control unit performs a first measurement using the signal of the light detector corresponding to the reference cell and calculates harmonic background functions comprising at least a second and third order harmonic function representing the behavior of the signal without influence of methane in the gas;
   the control unit performs a second measurement using the signal of the light detector corresponding to the gas and performs a curve fitting algorithm that fits precalculated harmonic functions representing the optical transmission spectrum of the gas with the methane concentration as a fitting parameter together with the harmonic background functions to the measured values, the precalculated harmonic functions comprising at least the second and third order harmonic function corresponding to multiples of a modulation frequency of the wavelength.

2. Optical methane detector in accordance with claim 1 wherein for the harmonic background functions of order 0 to 3 the control unit uses a cubic function, a quadratic function, a linear function and a constant value.

3. Optical methane detector in accordance with claim 1 wherein the control unit uses the fitting algorithm on all measurement values of a measurement combined with a single variable methane concentration as one of the fit parameters.

4. Optical methane detector in accordance with claim 1 wherein the control unit in the fitting algorithm performs a weighting of the residuals with a noise value that is assigned to each of the harmonics or each of the individual measurement values.

5. Optical methane detector in accordance with claim 1 comprising a reference gas cell filled with a gas mixture containing one of the group of ethylene, ethane and an isotope of methane disposed in the light path between light source and light detector.

6. Optical methane detector in accordance with claim 1 comprising a second light detector and a reference gas cell filled with a gas mixture containing methane disposed in the light path between light source and second light detector.

7. Optical methane detector in accordance with claim 1 comprising a logarithmic transimpedance amplifier for the light detector.

8. Method for optical methane detection comprising:

   illuminating a reference gas with first visible or infrared radiation;
   capturing parts of said first radiation and generating a first signal representing said captured parts of said first radiation;
   illuminating a gas with second visible or infrared radiation;
   capturing parts of said second radiation reflected back from a solid surface and generating a second signal representing said captured parts;
   modulating the emission wavelength of said first and second radiation;
   performing an analysis of said signals to calculate the transmittance of the gas and from this the methane concentration in the gas utilizing at least two of the harmonic spectra of the signal corresponding to multiples of a modulation frequency of the wavelength, this step comprising:

   performing a first measurement using the first signal and
   calculating harmonic background functions comprising at least a second and third order harmonic function representing the behavior of the signal without influence of methane in the gas;

performing a second measurement using the second signal and

performing a curve fitting algorithm that fits precalculated harmonic functions representing the optical transmission spectrum of the gas with the methane concentration as a fitting parameter together with the harmonic background functions to the measured values, the precalculated harmonic functions comprising at least the second and third order harmonic function corresponding to multiples of a modulation frequency of the wavelength.

Europäisches
Patentamt

European
Patent Office

Office européen
des brevets

**EUROPEAN SEARCH REPORT**

Application Number

EP 15 18 3828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KLUCZYNSKI P ET AL: "THEORETICAL DESCRIPTION BASED ON FOURIER ANALYSIS OF WAVELENGTH-MODULATION SPECTROMETRY IN TERMS OF ANALYTICAL AND BACKGROUND SIGNALS", APPLIED OPTICS, OPTICAL SOCIETY OF AMERICA, WASHINGTON, DC; US, vol. 38, no. 27, 20 September 1999 (1999-09-20), pages 5803-5815, XP001176660, ISSN: 0003-6935, DOI: 10.1364/AO.38.005803 * page 5805, right-hand column, last paragraph * | 1-8 | INV. G01N21/3504 G01J3/433 G01N21/39 |
| A | US 7 969 576 B1 (BUCKLEY STEVEN G [US] ET AL) 28 June 2011 (2011-06-28) * column 4, line 38 - column 5, line 21 * | 1-8 | |
| A | WO 2013/096396 A1 (UNIV LELAND STANFORD JUNIOR [US]) 27 June 2013 (2013-06-27) * page 20 - page 22, line 12 * | 1-8 | TECHNICAL FIELDS SEARCHED (IPC) |
| A | US 5 767 976 A (ANKERHOLD GEORG [DE] ET AL) 16 June 1998 (1998-06-16) * column 6, line 12 - column 7, line 54 * | 1-8 | G01N G01J |
| A | US 2006/262311 A1 (MUTA KENJI [JP] ET AL) 23 November 2006 (2006-11-23) * claim 1 * | 1-8 | |

The present search report has been drawn up for all claims

| Place of search | Date of completion of the search | Examiner |
|---|---|---|
| Munich | 2 March 2016 | Huenges, Alexandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 3828

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2016

| Patent document cited in search report | | Publication date | Patent family member(s) | | Publication date |
|---|---|---|---|---|---|
| US 7969576 | B1 | 28-06-2011 | NONE | | |
| WO 2013096396 | A1 | 27-06-2013 | CN | 104126106 A | 29-10-2014 |
| | | | US | 2014336957 A1 | 13-11-2014 |
| | | | WO | 2013096396 A1 | 27-06-2013 |
| US 5767976 | A | 16-06-1998 | DE | 19611290 A1 | 25-09-1997 |
| | | | US | 5767976 A | 16-06-1998 |
| US 2006262311 | A1 | 23-11-2006 | AU | 2004276642 A1 | 07-04-2005 |
| | | | AU | 2009200023 A1 | 05-02-2009 |
| | | | CA | 2536416 A1 | 07-04-2005 |
| | | | CA | 2689693 A1 | 07-04-2005 |
| | | | CN | 1860360 A | 08-11-2006 |
| | | | DK | 1669736 T3 | 27-06-2011 |
| | | | EP | 1669736 A2 | 14-06-2006 |
| | | | JP | 4317728 B2 | 19-08-2009 |
| | | | JP | 2005106546 A | 21-04-2005 |
| | | | RU | 2308023 C1 | 10-10-2007 |
| | | | US | 2006262311 A1 | 23-11-2006 |
| | | | WO | 2005031275 A2 | 07-04-2005 |

EPO FORM P0459

For more details about this annex : see Official Journal of the European Patent Office, No. 12/82